# EUROPÄISCHE PATENTSCHRIFT

(11) **EP 2 655 902 B1**
(45) Veröffentlichungstag und Bekanntmachung des Hinweises auf die Patenterteilung: **02.08.2017**
(21) Anmeldenummer: 11808583.6
(22) Anmeldetag: 16.12.2011
(51) Int. Cl.: F16B 37/04

(54) **KÄFIGMUTTER MIT HALTEVORRICHTUNG**
CAGE NUT HAVING A RETAINING DEVICE
ÉCROU DE CAGE POURVU D'UN DISPOSITIF DE RETENUE

(30) Priorität: 23.12.2010 DE 102010055554
(43) Veröffentlichungstag der Anmeldung: 30.10.2013
(73) Patentinhaber: Nedschroef Schrozberg GmbH, 74575 Schrozberg (DE)
(72) Erfinder: ENDT, Thomas, 65428 Rüsselsheim (DE); KRAUSS, Rainer, 74585 Brettheim (DE); OBERNDÖRFER, Siegfried, 74582 Gerabronn (DE); NEUHÄUSER, Stefan, 65527 Niedernhausen (DE)
(74) Vertreter: Patentanwälte Dörner & Kötter PartG mbB
(86) Internationale Anmeldenummer: PCT/EP2011/006378
(87) Internationale Veröffentlichungsnummer: WO 2012/084163

(56) Entgegenhaltungen:
- DE-U1- 9 409 087
- DE-U1-202010 006 746

## Beschreibung

Es wird eine Käfigmutter mit Haltevorrichtung und ein Verfahren zur Herstellung derselben beschrieben. Die Käfigmutter weist eine Mutter mit einem radial überstehenden eckigen Flansch und einer gewindehülsenartigen Aufnahme für eine Schraube auf. Eine Halterung mit einer Durchtrittsöffnung, die von der hülsenartigen Aufnahme durchsetzt ist, greift bügelartig über den eckigen Flansch der Mutter. Ein Haltekragen, der die hülsenartige Schraubenaufnahme der Mutter umschließt, stützt sich auf der Halterung im Bereich der Durchtrittsöffnung ab.

Eine derartige Käfigmutter ist aus der Druckschrift DE 94 09 087 U1 sowie der DE 20 2010 006 746 U1 als Haltevorrichtung für eine Mutter bekannt. Derartige Käfigmuttern werden als Teil einer Schrauben-Mutterverbindung eingesetzt, wobei Bauteile, wie Kfz-Motoren oder Sitze in einem Fahrzeug, an einem Widerlager der Karosserie des Fahrzeugs mittels der Käfigmuttern festgelegt werden. Zur Montagevereinfachung wird die Käfigmutter mittels der Halterung im Bereich der für den Schraubenbolzen bestimmten Durchtrittsöffnung des Widerlagers vormontiert. Die Halterung wird zu diesem Zweck fest mit dem Widerlager verbunden und übergreift in der Einbaulage die in ihrem Innern lose angeordnete Mutter.

Bei einem späteren Eindrehen eines Schraubenbolzens in das Muttergewinde der gewindehülsenartigen Schraubenaufnahme bietet die Halterung eine drehfeste Abstützung für den an der Mutter vorgesehenen radial überstehenden Flansch. Gleichzeitig verhindert die Halterung ein Ausweichen der Mutter in axialer Richtung des Schraubenbolzens. Dementsprechend lässt sich der Schraubenbolzen in die Mutter eindrehen, ohne dass diese von Hand beziehungsweise unter Zuhilfenahme entsprechender Werkzeuge fixiert werden muss.

Um Montagetoleranzen auszugleichen, die zwischen zu montierendem Bauteil, wie einem Motor oder Sitzen eines Fahrzeugs, und den in der Karosserie vorgesehenen Befestigungsstellen mit Käfigmutter, wird die Mutter in der Halterung mit Spiel gehalten. Dementsprechend verbleibt zwischen dem radialen Außenumfang der gewindehülsenartigen Schraubenaufnahme der Mutter und der Durchtrittsöffnung an der Halterung ein Spalt. Infolge dessen besteht bei der Verwendung der bekannten Halterung die Gefahr, dass die Mutter in der Halterung eine Kippbewegung gegen die axiale Ausrichtung des Schraubenbolzens ausführen kann. Durch die Kippbewegung der Mutter kann das Eindrehen des Schraubenbolzens in koaxialer Richtung in das Innengewinde der Mutter erschwert werden.

Darüber hinaus verursachen Muttern in den herkömmlichen Halterungen ein störendes Klappergeräusch, wenn die Käfigmutter an einer Mehrzahl von Fixierungspunkten für das Bauteil vorgesehen wird, um eine Mehrzahl von Varianten des Bauteils jederzeit einsetzten zu können. Überzählige Käfigmuttern, die eingesetzt werden, um dem Montagebedarf einer Mehrzahl von unterschiedlichen Bauteilvarianten zu entsprechen, sind dabei in der Halterung relativ frei beweglich und können dadurch besonders im Innenraum eines Fahrzeugs diese störenden Klappergeräusche verursachen, zumal die Muttern in axialer und radialer Richtung in dem bekannten Haltekragen frei beweglich sind und ein Verdrehen des eckigen Flanschbereiches zu störenden metallischen Anschlaggeräuschen führen kann, so dass der Eindruck entsteht, als sei diese Modellvariante nicht sicher und fehlerhaft montiert.

Aufgabe der Anmeldung ist es, eine Käfigmutter zu schaffen, bei der die Kippgefahr vermindert ist und eine Geräuschentwicklung für vorsorglich montierte und fixierte Käfigmuttern unterdrückt ist.

Diese Aufgabe wird mit den unabhängigen Anspruch gelöst. Vorteilhafte Weiterbildungen ergeben sich aus den abhängigen Ansprüchen.

Als Lösung dieser Aufgabe wird eine Käfigmutter mit Haltevorrichtung und ein Verfahren zur Herstellung derselben beschrieben. Die Käfigmutter weist eine Mutter mit einem radial überstehenden eckigen Flansch und einer gewindehülsenartigen Schraubenaufnahme für eine Schraube auf. Eine Halterung mit einer Durchtrittsöffnung, die von der hülsenartigen Schraubenaufnahme durchsetzt ist, greift bügelartig über den eckigen Flansch der Mutter. Ein Haltekragen, der die hülsenartige Schraubenaufnahme der Mutter umschließt, stützt sich auf der Halterung im Bereich der Durchtrittsöffnung ab. Der Haltekragen ist einstückig und weist erste und zweite Abdeckelemente auf, welche die Durchtrittsöffnung der Halterung beidseitig abdecken. Die Abdeckelemente des einstückigen Haltekragens sind über eine an der Schraubenaufnahme konzentrisch anliegende Verbindungsbuchse mechanisch verbunden. Die Verbindungsbuchse weist einen radialen Abstand von der Durchtrittsöffnung auf.

Ein Vorteil dieser Käfigmutter mit Haltevorrichtung ist es, dass beim Zusammenbau der Käfigmutter die Anzahl der miteinander zu verbindenden Teile auf drei Elemente, nämlich einer speziell geformten Käfigmutter, einer Halterung und eines Haltekragens verringert ist, so dass eine derartige Käfigmutter in ihrer Halterung kostengünstig herstellbar ist. Ein weiterer Vorteil besteht darin, dass durch die Einstückigkeit des Haltekragens eine Verschieblichkeit der Mutter unter Beibehaltung ihrer axialen Ausrichtung in der Durchtrittsöffnung gesichert ist.

Außerdem wird die Mutter in axialer Richtung derart durch den Haltekragen fixiert, dass eine Verkippung der Achse der Mutter innerhalb der Halterung durch den einstückigen Haltekragen nicht mehr möglich ist. Schließlich ist auch die axiale Bewegung der Mutter und das Verdrehen des eckigen Flansches soweit eingeschränkt, dass geräuschverursachende metallische Berührungen oder Kontaktierungen zwischen der Halterung und der Mutter durch den einstückigen Haltekragen unterbunden sind. Die in Grenzen erlaubte radiale Verschiebung führt aufgrund des Haltekragens zu keiner metallischen Kontaktierung zwischen der metallischen Mutter und der metallischen Halterung. Damit wird eine Geräuschentwicklung von nicht benutzten Positionen mit der Käfigmutter unterbunden.

Die Halterung der Käfigmutter weist einen Einführungsschlitz für den Haltekragen in die Durchtrittsöffnung auf. Dieser Einführungsschlitz hat eine Öffnungsbreite, die jedoch geringer ist als der Außendurchmesser der Verbindungsbuchse des einstückigen Haltekragens. Deshalb ist es vorgesehen, dass die Verbindungsbuchse an den Übergängen zu den Abdeckelementen jeweils gegenüberliegende Schlitze aufweist, so dass sich auf beiden Seiten der Gewindebuchse ein federelastischer Abschnitt ausbildet, der beim Einschieben des Haltekragens in den Einführungsschlitz nachgibt und beim Erreichen der Durchtrittsöffnung in seine Ursprungsform zurückfedert. Durch dieses Zurückfedern wird ein dauerhafter Verlierschutz erreicht, sobald die gewindehülsenartige Schraubenaufnahme in den Haltekragen eingeschoben ist.

Weiterhin ist es vorgesehen, um die Käfigmutter in dem Haltekragen zu fixieren, dass die gewindehülsenartige Schraubenaufnahme über den einstückigen Haltekragen hinausragt und auf dem Umfang des herausragenden Bereichs verteilte Verstemmungen aufweist. Diese Verstemmungen können auf einfache Weise durch einen Stempel in einer Druckpresse eingebracht werden und sind üblicherweise auf drei Stellen des Umfangs des herausragenden Endes der Schraubenaufnahme verteilt. Die Tiefe der Verstemmungen kann in der Druckpresse eingestellt werden. Damit kann mit einer Einstellung der Größe der Verstemmung die Gleitverschieblichkeit des einstückigen Haltekragens auf der Halterung im Bereich der Durchtrittsöffnung abschließend eingestellt werden, zumal beim Verstemmen der einstückige Haltekragen zwischen dem radial überstehenden eckigen Flansch und den Verstemmungen eingeklemmt wird.

Darüber hinaus ist es vorgesehen, dass das erste Abdeckelement des einstückigen Haltekragens zwischen dem überstehenden eckigen Flansch und der Halterung angeordnet ist und über die Randseiten des eckigen Flansches hinausragt. Durch dieses Hinausragen des ersten Abdeckelementes über den Rand des eckigen Flansches wird zusätzlich gewährleistet, dass es bei radialen Verschiebungen der Mutter und damit des eckigen Flansches in der Halterung nicht zu geräuschverursachenden metallischen Kontakten zwischen Halterung und Mutter kommen kann. Dieses unterstützt den Schutz gegen Geräuschentwicklung und sichert eine vollständige elektrische Isolation zwischen der Mutter und der Halterung.

Die vollständige Isolation der Mutter mit Innengewinde erfüllt einen weiteren Vorteil, indem beispielsweise bei nachfolgenden Lackierarbeiten in einem Bad der kathodischen Tauchlackierung auch KTL genannt lediglich die an der Karosserie angeschweißte Halterung der Käfigmutter lackiert wird. Da die Mutter selbst nicht auf das Lackierpotential gelegt werden kann, bleibt die Lackierung auf die metallische Halterung beschränkt. Die durch den einstückigen Haltekragen aus Kunststoff elektrisch isolierte Mutter selbst insbesondere ihr Innengewinde bleibt trotz metallisch leitendem Käfig frei von einer Lackschicht. Außerdem ist es vorgesehen, dass das zweite Abdeckelement, das sich auf der Halterung abstützt, nicht über die Halterung selbst hinausragt und vorzugsweise scheibenförmig ausgebildet ist. Somit werden die Au-βenmaße der Käfigmutter von der Halterung bestimmt.

In einer weiteren Ausführungsform ist das erste Abdeckelement eine Platte, die zwischen dem überstehenden eckigen Flansch und der Halterung angeordnet ist, wobei diese Platte an den Rändern quer zu dem Einführungsschlitz in Bezug auf die Halterung elastisch vorgespannte wellenförmige Dellen aufweist. Beim Einschieben des Haltekragens in den Einführungsschlitz sorgen diese vorgespannten elastischen wellenförmigen Dellen dafür, dass sich die Verbindungsbuchse axial ausrichtet und die Mutter problemlos in der Verbindungsbuchse in einer federelastisch vorgespannten axialen Ausrichtung positioniert werden kann.

Außerdem ist es vorgesehen, dass das zweite Abdeckelement, welches auf der Halterung aufliegt, Auswölbungen aufweist. Diese Auswölbungen sind dafür vorgesehen, dass das zweite Abdeckelement bei Einschieben in den Einführungsschlitz die elastischen wellenförmigen Dellen des ersten Abdeckelementes auf die Halterung zu vorspannen kann. Das zweite Abdeckelement kann entsprechend ausgebildet sein und entweder vorgespannte Federelemente aufweisen, wenn das erste Abdeckelement entsprechende Auswölbungen aufweist, um die Federelemente des zweiten Abdeckelementes gegen die Halterung zu pressen, oder das zweite Abdeckelement kann entsprechende Auswölbungen aufweisen, um die oben erwähnten vorgespannten wellenförmigen Dellen des ersten Abdeckelementes gegen die Halterung im Bereich der Durchtrittsöffnung vorzuspannen. Diese Ausführungsformen werden mit den nachfolgenden Figuren im Detail vorgestellt.

Neben den oben erwähnten radialen Schlitzen in den Übergangsbereichen zwischen Abdeckelement und Verbindungsbuchse zur Ausbildung von Federelementen der Verbindungsbuchse und den wellenförmigen Dellen beziehungsweise Auswölbungen der Abdeckelemente ist eine weitere Maßnahme zur Verbesserung des radial verschieblichen Sitzes der Mutter in der Durchtrittsöffnung vorgesehen. Dazu sind weitere Querschlitze in dem Verbindungselement vorgesehen. Diese Querschlitze sind parallel zu den federelastischen wellenförmigen Dellen und quer zu dem Einführungsschlitz in dem Übergang des Verbindungselements zu dem ersten Abdeckelement vorgesehen. Diese zusätzlichen quer zu dem Einführungsschlitz und parallel zu den wellenförmigen Dellen beziehungsweise den Aufwölbungen liegenden Schlitze in der Verbindungsbuchse schwächen zwar die Verbindungsbuchse, die mechanische Verbindung zwischen erstem und zweitem Abdeckelement des einstückigen Haltekragens, sind jedoch nicht so tief angeschnitten oder hinterschnitten, dass der Zusammenhalt des einstückigen Haltekragens gefährdet ist. Diese Freischnitte ermöglichen es, die elastischen wellenförmigen Dellen näher an der Verbindungsbuchse anzuordnen und damit einen größeren Aktionsbereich mit Federvorspannung zu erzeugen.

Eine weitere Ausführungsform sieht vor, dass der radial überstehende eckige Flansch rechteckig ist. Dabei weist die Halterung drei abgewinkelte Schenkel einer Basisplatte mit der Durchtrittsöffnung auf, wobei die drei Schenkel über drei Randseiten des rechteckigen Flansches der Mutter übergreifen. Mit diesen drei Schenkeln kann die Käfigmutter sicher auf einer Fixierposition des Karosseriebereichs verschweißt werden und gleichzeitig die Mutter über den rechteckigen Flansch drehfest, jedoch radial verschieblich in der Halterung und der Fixierungsposition befestigt werden.

Zwar hängt die Verschieblichkeit der Mutter innerhalb der Halterung von den Erfordernissen der Toleranzbreiten in der Fertigung ab, jedoch ist es vorgesehen, dass die Mutter mit dem in der Halterung vorgespannten Haltekragen in Richtung auf den Einführungsschlitz eine größere radiale Verschiebung als in Richtung quer zu dem Einführungsschlitz aufweist. Damit kann die Käfigmutter bei relativ hoher Langlochlänge und geringer Langlochbreite so vorgefertigt werden, dass die gewindehülsenartige Schraubenaufnahme in die Position eines Schraubenbolzens verschoben werden kann.

Während wie bereits oben erwähnt die Mutter und die Halterung Metalllegierungen aufweisen, kann der einstückige Haltekragen aus einem Kunststoff gefertigt sein. Ein derartiger Kunststoff sollte formstabil sein und dennoch federelastische Eigenschaften aufweisen, um die unterschiedlichen federelastischen Elemente für die Abdeckplatten der Abdeckelemente zur Verfügung zu stellen.

Ein Verfahren zur Herstellung einer Käfigmutter weist nachfolgende Verfahrensschritte auf. Zunächst werden aus einer Blechplatte mehrere bügelförmige Halterungen mit einer Basisplatte und drei abgewinkelten Schenkeln und eine Durchtrittsöffnung mit Einführungsschlitz in der Basisplatte ausgestanzt. Dieses kann in einem einzigen Stanzschritt erfolgen, so dass eine Massenproduktion derartiger bügelförmiger Halterungen möglich ist. Ferner werden Muttern hergestellt, die einen radial überstehenden eckigen Flansch aufweisen und eine gewindehülsenartige Schraubenaufnahme für eine Schraube besitzen.

Nach dem Stanzen beziehungsweise Herstellen dieser beiden Komponenten für eine Käfigmutter oder parallel dazu kann ein Spritzgießen eines Haltekragens durchgeführt werden, wobei der Haltekragen zwei Abdeckelemente aufweist, welche die Durchtrittsöffnung der Halterung beidseitig abdecken können und mit einer die Abdeckelemente verbindenden Verbindungsbuchse ausgestattet ist. Nachdem nun diese drei Komponenten für die Käfigmutter zur Verfügung stehen, wird zunächst der Haltekragen auf die Basisplatte der Halterung über den Einführungsschlitz aufgesteckt, bis die Abdeckelemente die Randbereiche der Durchtrittsöffnung beidseitig abdecken. Anschließend erfolgt ein axiales Einschieben der gewindehülsenartigen Schraubenaufnahme der Mutter in die Verbindungsbuchse des Haltekragens in der Durchtrittsöffnung. Abschließend erfolgt ein Verstemmen eines aus dem Haltekragen herausragenden Endes der gewindehülsenartigen Schraubenaufnahme zu einer axial ausgerichteten und radial in der Durchtrittsöffnung verschieblich gelagerten Käfigmutter. Bei diesem letzten Verfahrensschritt kann zusätzlich der Anpressdruck der beiden Abdeckelemente auf den Randbereich der Durchtrittsöffnung in der Halterung eingestellt werden.

Dieses Verfahren hat den Vorteil, dass mit relativ kostengünstigen Fertigungsmitteln und Werkzeugen die Käfigmuttern hergestellt werden können, die in der Halterung derart fixiert sind, dass sie zwar gleitverschieblich in radialer Richtung sind und dabei axial ausgerichtet bleiben, jedoch kann die Mutter in axialer Richtung sich nicht derart bewegen, dass eine Geräuschentwicklung auftritt oder eine Verkippung möglich ist.

Für das Verstemmen ist eine Druckpresse unter Einsatz eines Verstemmstempels vorgesehen, wobei nicht das gesamte herausragende Ende der Schraubenaufnahme ringförmig verstemmt wird, sondern lediglich an drei auf den Umfang verteilten Positionen Verstemmungen vorgenommen werden.

Ein Verfahren zum Fixieren von Komponenten in einem Fahrzeug mit Hilfe von mehreren Käfigmuttern gemäß den obigen Ausführungsformen und mit passenden Schrauben sieht vor, dass Fahrzeugsitze an Profilschienen in dem Fahrzeug oder Motoren an Karosserieteilen in einem Motorraum des Fahrzeugs fixiert werden, nachdem Schenkel der Halterungen der Käfigmuttern an den Profilschienen bzw. den Karosserieteilen auf vorbestimmten Fixierpositionen von Widerlagern angeschweißt sind. Dabei ist es in vorteilhafter Weise möglich Fixierpunkte vorzusehen, die für andere Modellbaureihen beispielsweise bei der Sitzfixierung vorgesehen sind, ohne diese Käfigmuttern mit Blindschrauben oder Stopfen fixieren zu müssen. Die Käfigmuttern sind allein durch den einstückigen Haltekragen derart gesichert in der Halterung angeordnet, dass Erschütterungen keine Geräuschquelle auslösen können oder die Mutter aus diesem Haltekragen lösen.

Ausführungsformen werden nun anhand der beigefügten Figuren näher erläutert.
- Figur 1: zeigt eine schematische perspektivische Ansicht einer Mutter für eine Käfigmutter gemäß einer ersten Ausführungsform;
- Figur 2: zeigt eine schematische perspektivische Ansicht einer Halterung für die Käfigmutter gemäß der ersten Ausführungsform;
- Figur 3: zeigt eine schematische perspektivische Ansicht eines Haltekragens für die Käfigmutter gemäß der ersten Ausführungsform;
- Figur 4: zeigt einen schematischen Längsschnitt durch die Käfigmutter gemäß der ersten Ausführungsform;
- Figur 5: zeigt eine schematische perspektivische Ansicht einer Mutter für eine Käfigmutter gemäß einer zweiten Ausführungsform;
- Figur 6: zeigt eine schematische perspektivische Ansicht einer Halterung für die Käfigmutter gemäß der zweiten Ausführungsform;
- Figur 7: zeigt eine schematische perspektivische Ansicht eines Haltekragens für die Käfigmutter gemäß der zweiten Ausführungsform;
- Figur 8: zeigt einen schematischen Längsschnitt durch die Käfigmutter gemäß der zweiten Ausführungsform;
- Figur 9: zeigt eine schematische perspektivische Ansicht einer Mutter für eine Käfigmutter gemäß einer dritten Ausführungsform;
- Figur 10: zeigt eine schematische perspektivische Ansicht einer Halterung für die Käfigmutter gemäß der dritten Ausführungsform;
- Figur 11: zeigt eine schematische perspektivische Ansicht eines Haltekragens für die Käfigmutter gemäß der dritten Ausführungsform;
- Figur 12: zeigt einen schematischen Längsschnitt durch die Käfigmutter gemäß der dritten Ausführungsform.

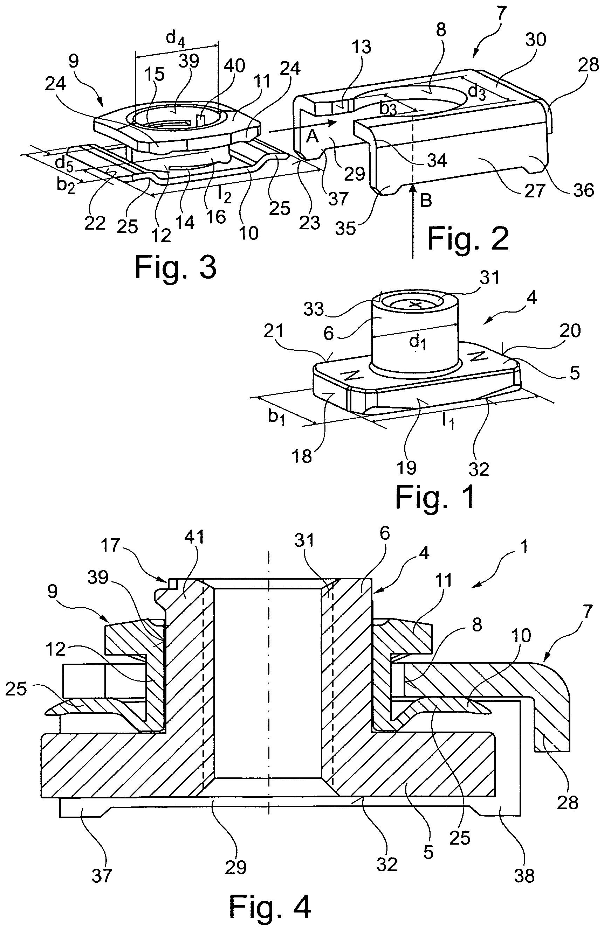

Figur 1 zeigt eine schematische perspektivische Ansicht einer Mutter 4 für eine Käfigmutter gemäß einer ersten Ausführungsform. Diese Mutter 4 weist einen nahezu eckigen Flansch 5 auf, aus dem eine Schraubenaufnahme 6 für einen Schraubenbolzen herausragt. Diese Mutter 4 weist ein durchgängiges Innengewinde 31 auf, das von der Flanschunterseite 32 aus bis zu einem herausragenden Ende 33 der Schraubenaufnahme 6 reicht. Der radial überstehende Flansch 5 ist in dieser Ausführungsform rechteckig und weist vier Randseiten 18, 19, 20 und 21 auf. Die Länge des Flansches 5 zwischen der Randseite 18 und der Randseite 20 ist l₁, und die Breite des Flansches 5 zwischen der Randseite 19 und der Randseite 21 ist b₁.

Figur 2 zeigt eine schematische perspektivische Ansicht einer Halterung 7 für die Käfigmutter gemäß der ersten Ausführungsform. Die Halterung 7 weist eine Basisplatte 30 auf, in der eine Durchtrittsöffnung 8 vorgesehen ist, durch welche die gewindehülsenartigen Schraubenaufnahme 6 der in Figur 1 gezeigten Mutter 4 einsteckbar ist. Der Durchmesser d₃ dieser Durchtrittsöffnung 8 ist deutlich geringer als der in Figur 1 gezeigte Durchmesser d₁ der Schraubenaufnahme. Die Basisplatte 30 ist auf drei Seiten abgewinkelt zu Schenkeln 27, 28 und 29, welche über den in Figur 1 gezeigten Randseiten 19, 20 und 21 des Flansches 5 greifen können.

Eine Randseite 34, die keinen derartigen Schenkel aufweist, besitzt einen Einführungsschlitz 13, dessen Breite b₃ geringer ist als der Durchmesser d₃ der Durchtrittsöffnung 8. Außerdem weisen die einander gegenüberliegenden Schenkel 27 und 29 Fußelemente 35, 36 und 37 auf, mit denen die Halterung 7 an ein Widerlager einer Fahrzeugkarosserie geschweißt werden kann. Die Schenkel 27 und 29 greifen dann über die in Figur 1 gezeigten Randseiten 19 und 21 des radial überstehenden Flansches 5.

Figur 3 zeigt eine schematische perspektivische Ansicht eines Haltekragens 9 für die Käfigmutter gemäß der ersten Ausführungsform. Dieser Haltekragen 9 ist einstückig und aus drei Komponenten zusammengesetzt, nämlich aus einem ersten Abdeckelement 10, das die in Figur 2 gezeigte Durchtrittsöffnung 8 von unten abdecken kann, aus einem zweiten Abdeckelement 11 , das die in Figur 2 gezeigte Durchtrittsöffnung 8 von oben abdecken kann, und eine dazwischen angeordnete Verbindungsbuchse 12, welche die beiden Abdeckelemente 10 und 11 miteinander mechanisch verbindet.

Der Innendurchmesser d₄ der Verbindungsbuchse 12 ist so bemessen, dass er dem Außendurchmesser d₁ der Schraubenaufnahme 6 der Mutter 4 in Figur 1 entspricht, wobei zusätzliche Innenwulste 40 beim Zusammenbau der Käfigmutter für einen Presssitz der Schraubenaufnahme 6 sorgen. Der Außendurchmesser d₅ der Verbindungsbuchse 12 ist kleiner als der Innendurchmesser d₃ der in Figur 2 gezeigten Durchtrittsöffnung 8. Dadurch wird für ein ausreichendes Spiel zwischen dem einstückigen Haltekragen 9 und der Halterung 7 innerhalb der Durchtrittsöffnung 8 der in Figur 2 gezeigten Halterung 7 gesorgt. Der Außendurchmesser d₅ der Verbindungsbuchse 12 des Haltekragens 9 ist außerdem kleiner als die Breite b₃ des Einführungsschlitzes 13 der in Figur 2 gezeigten Halterung 7.

Bei einem Einschieben des Haltekragens 9 in Pfeilrichtung A über den Einführungsschlitz 13 in die Durchtrittsöffnung 8 der Halterung 7, wie in Figur 2 gezeigt, würde deshalb der Haltekragen 9 an dem Einführungsschlitz 13 hängen bleiben. Um dieses zu vermeiden, weist die Verbindungsbuchse 12 radiale Schlitze 14 und 15 an den Übergängen der Verbindungsbuchse 12 zu den Abdeckelementen 10 und 11 auf, so dass einander gegenüberliegende Federelemente 16 entstehen. Beim Einführen des Haltekragens 9 in den Einführungsschlitz 13 in Pfeilrichtung A geben diese Federelemente 16 der Verbindungsbuchse 12 nach und ermöglichen die Positionierung des Haltekragens 9 in der Durchtrittsöffnung 8. Dabei verbleibt ein Abstand zwischen der Verbundbuchse 12 und der Durchtrittsöffnung 8, da der Außendurchmesser d₅ kleiner als der Innendurchmesser d₃ ist. Dieser Abstand ermöglicht dass der Haltekragen 9 radial in der Durchtrittsöffnung 8 verschoben werden kann.
Durch die beiden Abdeckelemente 10 und 11 gewährleistet der Haltekragen 9, dass eine radiale Gleitverschiebung auf der Basisplatte 30 der Halterung 7 möglich ist. Um eine Vorspannung zwischen der Halterung 7 und dem Haltekragen 9 sicherzustellen, ist das erste Abdeckelement 10 als Platte ausgebildet, die an ihren Rändern 22 und 23 jeweils eine wellenförmige Delle 25 aufweist, die federelastisch nachgeben kann. Das zweite Abdeckelement 11 weist demgegenüber Aufwölbungen 24 auf, die sich auf der Basisplatte 30 der Halterung 7 abstützen, so dass nach dem Einführen des Haltekragens 9 über den Einführungsschlitz 13 in die Durchtrittsöffnung 8 der Haltekragen gleitverschieblich auf der Basisplatte 30 fixiert ist.

Die Innenöffnung 39 des Haltekragens 9 bleibt bei den möglichen radialen Verschiebungen immer axial ausgerichtet. Nach dem Zusammenschieben von Halterung 7 und Haltekragen 9 kann in Pfeilrichtung B, wie in Figur 1 gezeigt, die Mutter 4 mit der Schraubenaufnahme 6 durch die Innenöffnung 39 verschoben werden, so dass die Schenkel 27 und 29 der Halterung 7 über die Randseiten 19 und 21 des Flansches 5 der Mutter 4 übergreifen. Durch das Einschieben des Teils 4 wird automatisch das Federelement 16 blockiert, was eine zerstörungsfreie Entfernung unmöglich macht. Eine derartig zusammengebaute Käfigmutter kann dann mit Hilfe der Fußelemente 35, 36 und 37 der Schenkel 27 und 29 auf einem Widerlager fixiert werden und ein Schraubenbolzen kann über die Flanschunterseite 32 in die in axialer Richtung stabil gehaltene Mutter 4 eingeführt werden.

Figur 4 zeigt einen schematischen Längsschnitt durch die Käfigmutter 1 gemäß der ersten Ausführungsform. In diesem Längsschnitt sind die drei Komponenten, die oben mit den Figuren 1 bis 3 beschrieben wurden, zusammengesteckt, so dass nun in der Durchtrittsöffnung 8 der Halterung 7 der Haltekragen 9 angeordnet ist und mit seinen Abdeckelementen 10 und 1 1 die Durchtrittsöffnung 8 bedeckt. Die Verbindungsbuchse 12, welche die Abdeckelemente 10 und 1 1 des Haltekragens 9 mechanisch verbindet, hält mittels eines koaxialen Presssitzes die Mutter 4 in der Halterung 7 axial ausgerichtet. Dazu ist die Mutter 4 mit ihrer gewindehülsenartige Schraubenaufnahme 6 in der Innenöffnung 39 der Verbindungsbuchse 12 fixiert.

Ein aus dem Haltekragen 9 herausragender Bereich 41 weist auf dem Umfang verteilt Verstemmungen 17 auf, die ein Herausrutschen der Schraubenaufnahme 6 aus dem Haltekragen 9 verhindern. Gegenüber diesem aus dem Haltekragen 9 herausragenden Bereich 41 der Mutter 4 ist der radial überstehende eckige Flansch 5 mit seiner Unterseite 32 angeordnet, von der aus ein Schraubenbolzen in das Innengewinde 31 der Mutter 4 eingedreht werden kann. Da die Fußelemente 37 und 38 des Schenkels 29 stoffschlüssig mit einem Widerlager eines Karosserieteils verbunden sind, ist die Mutter 4 durch den rechteckigen Flansch 5 in der Halterung 7 gegen Verdrehen gesichert.

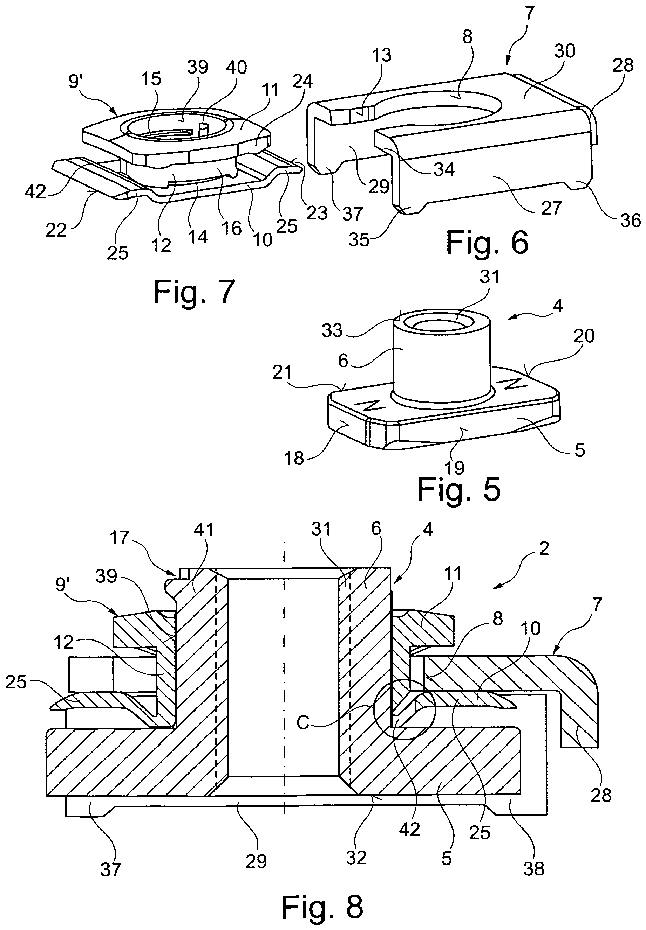

Darüber hinaus ist das erste Abdeckelement 10 des aus Kunststoff hergestellten Haltekragens 9 derart an den rechteckigen Flansch 5 angepasst, dass die in Figur 3 gezeigte Länge l₂ geringfügig größer als die in Figur 1 gezeigte Länge l₁ des rechteckigen Flansches 5 ist und ebenso die in Figur 3 gezeigte Breite b₂ des ersten Abdeckelementes 10 des Haltekragens 9 größer als die Breite b₁ des in Figur 1 gezeigten rechteckigen Flansches 5, womit erreicht wird, dass der rechteckige Flansch 5 bei dem wie in Figur 4 gezeigten Zusammenbau trotz der radialen Verschieblichkeit des Haltekragens 9 in der Durchtrittsöffnung 8 keinen Kurzschluss hervorruft und die Mutter 4 in jeder Lage von der Halterung 7 isoliert bleibt. Damit ergibt sich auch kein elektrischer Kontakt zu der Karosserie, so dass bei einer kathodischen Tauchlackierung eines KTL- Bades die Mutter und ihr Innengewinde nicht mitlackiert werden. Die Figuren 5 bis 8 zeigen eine Käfigmutter 2 gemäß einer zweiten Ausführungsform der in den Figuren 1 bis 4 beschriebenen Käfigmutter 1. Komponenten in den Figuren 5 bis 8, welche die gleichen Funktionen wie in den Figuren 1 bis 4 aufweisen, werden mit gleichen Bezugszeichen gekennzeichnet und nicht extra erörtert. Wie unschwer zu sehen ist, unterscheiden sich die Mutter 4 und die Halterung 7 in den Figuren 5 und 6 nicht von der in Figur 1 gezeigten Mutter 4 und der in Figur 2 gezeigten Halterung 7, so dass sich eine erneute Erörterung erübrigt. Lediglich in Figur 7 ist ein geänderter Haltekragen 9' abgebildet, der sich von dem Haltekragen in Figur 3 dadurch unterscheidet, dass die Verbindungsbuchse zusätzlich zu den radialen Schlitzen 14 und 15 einen weiteren Schlitz, quer zu dem in Figur 2 gezeigten Einführungsschlitz 13, als Freischnitt 42 aufweist.

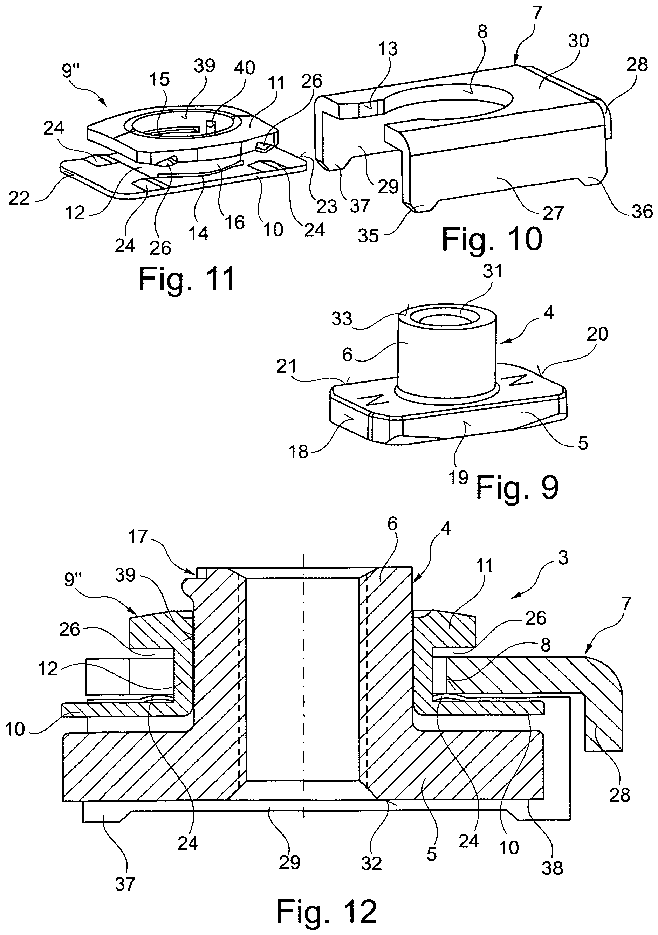

Dieser Freischnitt 42 wird noch deutlicher in Figur 8 sichtbar, die einen schematischen Längsschnitt durch die Käfigmutter 2 gemäß der zweiten Ausführungsform zeigt. In diesem Längsschnitt gemäß Figur 8 ist der Freischnitt 42 in dem markierten Kreis C zu sehen, wobei durch diesen Freischnitt 42 es möglich wird, dass die quer liegende federelastische wellenförmige Delle 25 deutlich näher zu der Durchtrittsöffnung 8 angeordnet ist, womit zum einen die Federkonstante der elastischen wellenförmige Delle 25 verringert werden kann und zum andern eine kompaktere Bauweise der Käfigmutter 2 möglich wird, da die Längserstreckung des radial überstehenden Flansches 5 vermindert werden kann. Figuren 9 bis 12 zeigen eine dritte Ausführungsform einer Käfigmutter 3, wobei auch hier Komponenten mit gleichen Funktionen wie in den vorhergehenden Figuren mit gleichen Bezugszeichen gekennzeichnet und nicht extra erörtert werden. Auch in dieser dritten Ausführungsform bleiben die Mutter 4, wie sie in Figur 9 zu sehen ist, und die Halterung 7, wie sie in Figur 10 gezeigt wird, unverändert so, wie bereits mit den Figuren 1 und 2, beschrieben.

Lediglich der Haltekragen 9" unterscheidet sich von den vorhergehenden Ausführungsform dadurch, dass das untere Abdeckelement 10 eine ebene Fläche aufweist, aus der nachgiebige Aufwölbungen 24 herausragen. Von dem gegenüberliegenden Abdeckelement 11 stehen Federelemente 26 in Richtung auf die in Figur 10 gezeigte Basisplatte 30 der Halterung 7 ab, die dafür sorgen, dass der Haltekragen 9" unter Vorspannung in die Halterung 7 eingeschoben werden kann. Auch in dieser Ausführungsform ist durch die Größe des ebenen Abdeckelementes 10 dafür gesorgt, dass der radial überstehende eckige Flansch 5 trotz der radialen Verschieblichkeit des Haltekragens 9" in der Halterung 7 keinen Kurzschluss zwischen der Halterung 7 und der Mutter 4 hervorrufen kann. Auch eine Geräuschentwicklung wird durch diesen neuen Haltekragen 9" vermieden.

## Patentansprüche

1. Käfigmutter mit Haltevorrichtung aufweisend:
- eine Mutter (4) mit einem radial überstehenden eckigen Flansch (5) und einer gewindehülsenartigen Aufnahme (6) für eine Schraube,
- eine Halterung (7) mit einer Durchtrittsöffnung (8), die von der hülsenartigen Schraubenaufnahme (6) durchsetzt ist, wobei die Halterung (7) bügelartig den eckigen Flansch (5) übergreift,
- einen Haltekragen (9), der die hülsenartige Schraubenaufnahme (6) der Mutter (4) umschließt und der sich auf der Halterung (7) im Bereich der Durchtrittsöffnung (8) abstützt,
wobei der Haltekragen (9) einstückig ist und die Durchtrittsöffnung (8) der Halterung (7) beidseitig abdeckende erste und zweite Abdeckelemente (10, 11) aufweist, und wobei die Abdeckelemente (10, 11) über eine an der Schraubenaufnahme (6) konzentrisch anliegende Verbindungsbuchse (12) mechanisch verbunden sind, und wobei die Verbindungsbuchse (12) einen radialen Abstand von der Durchtrittsöffnung (8) aufweist, **dadurch gekennzeichnet, dass** die Halterung (7) einen Einführungsschlitz (13) für den Haltekragen (9) in die Durchtrittsöffnung (8) aufweist, wobei die Verbindungsbuchse (12) radiale Schlitze (14, 15) in den mechanischen Übergängen zu den Abdeckelementen (10, 11) aufweist, die derart angeordnet sind, dass die Verbindungsbuchse (12) einander gegenüberliegende Federelemente (16) zum Einführen des einstückigen Haltekragens (9) in die Durchtrittsöffnung (8) aufweist.

2. Käfigmutter nach einem der vorhergehenden Ansprüche, wobei die gewindehülsenartige Schraubenaufnahme (6) über den einstückigen Haltekragen (9) hinausragt und auf dem Umfang des herausragenden Bereichs verteilte Verstemmungen (17) aufweist.

3. Käfigmutter nach einem der vorhergehenden Ansprüche, wobei das erste Abdeckelement (10) des einstückigen Haltekragens (9) zwischen dem überstehenden eckigen Flansch (5) und der Halterung (7) angeordnet ist und über die Randseiten (18 bis 21) des eckigen Flansches (5) hinausragt.

4. Käfigmutter nach einem der vorhergehenden Ansprüche, wobei das zweite Abdeckelement (11) scheibenförmig ist und nicht über die Halterung (7) hinausragt.

5. Käfigmutter nach einem der vorhergehenden Ansprüche, wobei das erste Abdeckelement (10) eine Platte ist, die an Rändern (22, 23) quer zu dem Einführungsschlitz (13) in Bezug auf die Halterung (7) elastisch vorgespannte wellenförmige Dellen (25) oder Aufwölbungen (24) aufweist.

6. Käfigmutter nach einem der vorhergehenden Ansprüche, wobei das zweite Abdeckelement (11) quer zu dem Einführungsschlitz (13) in Bezug auf die Halterung Aufwölbungen (24) oder elastisch vorgespannte Federelemente (26) in den Randbereichen des zweiten Abdeckelementes (11) aufweist.

7. Käfigmutter nach einem der vorhergehenden Ansprüche, wobei der radial überstehende eckige Flansch (5) rechteckig ist, und wobei die Halterung (7) drei abgewinkelte Schenkel (27, 28, 29) einer Basisplatte (30) mit der Durchtrittsöffnung (8) aufweist, wobei die drei Schenkel (27, 28, 29) über drei Randseiten (19, 20, 21) des rechteckigen Flansches (5) der Mutter (4) übergreifen.

8. Käfigmutter nach einem der vorhergehenden Ansprüche, wobei die Mutter (4) mit dem in der Halterung (7) vorgespannten Haltekragen (9) in Richtung auf den Einführungsschlitz (13) eine größere radiale Verschiebung als in Richtung quer zu dem Einführungsschlitz (13) aufweist.

9. Käfigmutter nach einem der vorhergehenden Ansprüche, wobei die Mutter (4) und die Halterung (7) Metalllegierungen aufweisen, und wobei der einstückige Haltekragen (9) einen Kunststoff aufweist.

10. Käfigmutter nach einem der vorhergehenden Ansprüche, wobei die Mutter (4) von der Halterung (7) elektrisch isoliert ist.

## Claims

1. Cage nut having a retaining device demonstrating:
- a nut (4) with a radially protruding angular flange (5) and a threaded sleeve-type holder (6) for a screw,
- a bracket (7) with an opening (8) which is penetrated by the sleeve-type screw holder (6) whereby the bracket (7) clamps over the angular flange (5) like a clip,
- a retaining collar (9) which surrounds the sleeve-type screw holder (6) of the nut (4) and which supports itself on the bracket (7) in the area of the opening (8),
whereby the retaining collar (9) is in one piece and the opening (8) of the bracket (7) has first and second covering elements (10, 11) covering both ends and whereby the covering elements (10, 11) are mechanically connected via a concentrically fitting connecting sleeve (12) resting on the screw holder (6), **characterized in that** the bracket (7) has an insertion slot (13) for the retaining collar (9) in the opening (8) whereby the connecting sleeve (12) has radial slots (14, 15) in the mechanical transitions to the covering elements (10, 11), that are arranged in such a way that the connecting sleeve (12) has opposing spring elements (16) for insertion of the one-piece retaining collar (9) in the opening (8).

2. Cage nut according to one of the preceding claims, whereby the sleeve-type screw holder (6) protrudes out above the one-piece retaining collar (9) and has packing (17) spread around the extent of the protruding area.

3. Cage nut according to one of the preceding claims, whereby the first covering element (10) of the one-piece retaining collar (9) is located between the protruding angular flange (5) and the bracket (7) and protrudes beyond the side edges (18 to 21) of the angular flange (5).

4. Cage nut according to one of the preceding claims, whereby the second covering element (11) is disc-shaped and does not protrude beyond the bracket (7).

5. Cage nut according to one of the preceding claims, whereby the first covering element (10) is a plate which has elastically pre-stressed wavelike indentations (25) or bulges (24) on the edges (22, 23) crossways to the insertion slot (13) in relation to the bracket (7).

6. Cage nut according to one of the preceding claims, whereby the second covering element (11) has bulges (24) or elastically pre-stressed spring elements (26) in the edge areas of the second covering element (11) crossways to the insertion slot (13) in relation to the bracket.

7. Cage nut according to one of the preceding claims, whereby the radially protruding angular flange (5) is rectangular and whereby the bracket (7) has three downward angled sides (27, 28, 29) of a base plate (30) with the opening (8), whereby the three sides (27, 28, 29) overlap three side edges (19, 20, 21) of the rectangular flange (5) of the nut (4).

8. Cage nut according to one of the preceding claims, whereby the nut (4) together with the retaining collar (9) clamped in the bracket (7) shows a larger radial displacement in the direction of the insertion slot (13) than in the direction crossways to the insertion slot (13).

9. Cage nut according to one of the preceding claims, whereby the nut (4) and the bracket (7) are of metal alloys and whereby the single-piece retaining collar (9) features a plastic.

10. Cage nut according to one of the preceding claims, whereby the nut (4) is electrically insulated from the bracket (7).

## Revendications

1. Écrou de cage pourvu d'un dispositif de retenue, comportant :
- un écrou (4) pourvu d'une bride (5) rectangulaire radialement en saillie et d'un élément d'accueil (6) de type douille filetée pour l'accueil d'une vis,
- d'une retenue (7) présentant une ouverture de passage (8) traversée par l'élément d'accueil de vis (6) de type douille, la retenue (7) entourant comme un étrier la bride rectangulaire,
- une collerette de retenue (9) entourant l'élément d'accueil de vis (6) de type douille et reposant sur la retenue (7) dans la zone de l'ouverture de passage (8), la collerette de retenue (9) étant en une pièce et l'ouverture de passage (8) de la retenue (7) présentant des deux côtés des éléments de recouvrement (10, 11) premiers et seconds, les éléments de recouvrement (10, 11) premiers et seconds étant reliés mécaniquement par une douille de connexion (12) située concentriquement à l'élément d'accueil de vis (6), et la douille de connexion (12) présentant un écart radial par rapport à l'ouverture de passage (8), **caractérisé en ce que** la retenue (7) présente une fente d'introduction (13) pour la collerette de retenue (9) pour l'introduction dans l'ouverture de passage (8), la douille de connexion (12) présentant des fentes radiales (14, 15) dans les transitions mécaniques aux éléments de recouvrement (10, 11), situées de telle sorte que la douille de connexion (12) présente des éléments ressorts (16) placés l'un en face de l'autre, permettant l'introduction, dans l'ouverture de passage (8), de la collerette de retenue (9) en une pièce.

2. Écrou de cage selon l'une des revendications ci-dessus, l'élément d'accueil de vis (6) de type douille dépassant de la collerette de retenue (9) en une pièce et présentant, sur le pourtour de la zone la dépassant, des sertissages (17) répartis.

3. Écrou de cage selon l'une des revendications ci-dessus, le premier élément de recouvrement (10) de la collerette de retenue (9) en une pièce étant situé entre la bride (5) rectangulaire en saillie et la retenue (7) et dépassant des bords (18 à 21) de la bride (5) rectangulaire.

4. Écrou de cage selon l'une des revendications ci-dessus, le second élément de recouvrement (11) étant une rondelle et ne dépassant pas de la retenue (7).

5. Écrou de cage selon l'une des revendications ci-dessus, le premier élément de recouvrement (10) étant une plaque présentant au niveau des bords (22, 23) transversalement à la fente d'introduction (13), par rapport à la retenue (7), des parties déformées (25) ondulées à précontrainte élastique ou des courbures (24) à précontrainte élastique.

6. Écrou de cage selon l'une des revendications ci-dessus, le second élément de recouvrement (11) présentant transversalement à la fente d'introduction (13), par rapport à la retenue, des courbures (24) ou des éléments ressorts (26) à précontrainte élastique dans les zones des bords du second élément de recouvrement (11).

7. Écrou de cage selon l'une des revendications ci-dessus, la bride (5) rectangulaire radialement en saillie étant rectangulaire, et la retenue (7) présentant trois côtés (27, 28, 29), formant angle, d'une plaque de base (30) pourvue de l'ouverture de passage (8), les trois côtés (27, 28, 29) dépassant sur trois bords (19, 20, 21) de la bride rectangulaire (5) de l'écrou (4).

8. Écrou de cage selon l'une des revendications ci-dessus, l'écrou (4) avec la collerette de retenue (9) en précontrainte dans la retenue (7) présentant vers la fente d'introduction (13) un plus grand déport radial que dans le sens transversal à la fente d'introduction (13).

9. Écrou de cage selon l'une des revendications ci-dessus, l'écrou (4) et la retenue (7) présentant des alliages métalliques et la collerette de retenue (9) en une pièce présentant une matière plastique.

10. Écrou de cage selon l'une des revendications ci-dessus, l'écrou (4) étant électriquement isolé de la retenue (7).
